# EUROPEAN PATENT APPLICATION

(11) **EP 2 913 689 A2**
(43) Date of publication of application: **02.09.2015**
(21) Application number: 15155091.0
(22) Date of filing: 13.02.2015
(51) Int. Cl.: G01S 5/00, H04W 4/00

(54) **Proximity detection of candidate companion display device in same room as primary display using WI-FI or bluetooth signal strength**

(30) Priority: 25.02.2014 US 201414189816
(71) Applicant: Sony Corporation, Tokyo 108-0075 (JP)
(72) Inventor: Candelore, Brant, San Diego, California 92128 (US)
(74) Representative: D Young & Co LLP

(57) **Abstract**

A candidate companion screen device is located by a primary display device as being in the same room as the primary device, and in response ancillary content related to content being shown on the primary display device is provided to the companion screen device. The ancillary content may be provided from the Internet based on information in the content being presented on the primary display device by, e.g., providing a link to a website to the companion device. The primary display device may locate the companion screen device as being in the same room by comparing Bluetooth and/or Wi-Fi signal strengths from the companion screen device to a threshold, and if the threshold is met, the device is sent a message to link to ancillary content or is automatically linked to ancillary content.

## Description

The application relates generally but not exclusively to determining that a candidate companion display device is in the same room as a primary display using Wi-Fi or Bluetooth signal strength.

A computer ecosystem, or digital ecosystem, is an adaptive and distributed socio-technical system that is characterized by its sustainability, self-organization, and scalability. Inspired by environmental ecosystems, which consist of biotic and abiotic components that interact through nutrient cycles and energy flows, complete computer ecosystems consist of hardware, software, and services that in some cases may be provided by one company, such as Sony. The goal of each computer ecosystem is to provide consumers with everything that may be desired, at least in part services and/or software that may be exchanged via the Internet. Moreover, interconnectedness and sharing among elements of an ecosystem, such as applications within a computing cloud, provides consumers with increased capability to organize and access data and presents itself as the future characteristic of efficient integrative ecosystems.

Two general types of computer ecosystems exist: vertical and horizontal computer ecosystems. In the vertical approach, virtually all aspects of the ecosystem are owned and controlled by one company, and are specifically designed to seamlessly interact with one another. Horizontal ecosystems, one the other hand, integrate aspects such as hardware and software that are created by other entities into one unified ecosystem. The horizontal approach allows for greater variety of input from consumers and manufactures, increasing the capacity for novel innovations and adaptations to changing demands.

An example ecosystem that is pertinent here is a home entertainment ecosystem that includes a TV and various nearby display devices such as wireless communication devices. As understood herein, to pair the TV with a device in the home ecosystem for use as a "companion" device to the TV, typically a user must select a device from a long list of ecosystem devices, in the home and in many cases those in neighboring homes, which might have been discovered wirelessly. Usually, it is up to the user (a human) to figure out which devices are in the home let alone the same room.

Present principles are directed to allowing a primary display device (PDD) such as an audio video display device (AVDD) such as a TV to discover candidate companion screen devices (CCSD), e.g., tablet computers, wireless telephones, and the like that are not just present in the home ecosystem but that also are in the same room as the PDD. This promotes intelligently selecting which one of multiple CCSDs to select for presenting ancillary content related to primary content being shown on the PDD, as CCSDs outside the room in which the PDD is located are not as useful or even desirable to show ancillary content when the user of the outside-the-room device cannot see the PDD. The PDD can send a CCSD in the same room as the PDD a message about whether the user desires to have ancillary data presented on the CCSD.

It should be noted that the PDD may be established by a device with a relatively small display such as a wireless tablet, if it is the device of focus with content that is playing. In this scenario, the CCSD may be established by, for example, a larger screen TV without affecting present principles. The companion device in the same room may be discovered and evaluated as being in the same room using signal strength. In one example, the PDD may gradually reduce its transmission power while pinging the CCSDs. CCSDs that are able to respond at lower power settings are inferred to be receiving a better signal that did not get attenuated by walls and therefore are in the same room as the PDD.

Thus, signal strength of a Wi-Fi or Bluetooth signal from CCSDs in the home ecosystem can be monitored by, for example, the PDD or by a monitoring device adjacent the PDD. If the signal strength of a particular CCSD is strong, e.g. above a certain threshold, then the CCSD is inferred to be in the same room as the PDD. If the signals strength is weaker, then there are assumed to be intervening walls, etc., and the CCSD is inferred to be out of the room. The advantage of the approaches using signal strength is that it does not assume any other transmission technology - simply monitoring signal strength of existing CCSD transmitters or adjusting transmitted power of PDDs.

Accordingly, a device includes at least one computer readable storage medium bearing instructions executable by a processor, and at least one processor configured for accessing the computer readable storage medium to execute the instructions to configure the processor for determining whether a candidate companion screen device (CCSD) in proximity to a primary display device (PDD) is within a room in a building in which the PDD is disposed in which the PDD is presenting primary content. Responsive to determining that the CCSD in proximity to the PDD is within the room in the building in which the PDD is disposed, the processor when executing the instructions is configured for causing ancillary content related to the primary content to be provided to the CCSD for presentation of the ancillary content thereon, and/or causing a message regarding accessing ancillary content to be provided to the CCSD for presentation of the message thereon.

In some examples, the processor when executing the instructions is configured for determining whether a CCSD in proximity to the PDD is within a room in a building in which the PDD is disposed using Wi-Fi signal strength. In other examples, the processor when executing the instructions is configured for determining whether a CCSD in proximity to the PDD is within a room in a building in which the PDD is disposed using Bluetooth signal strength. Note that in this disclosure, Bluetooth Low Energy (LE) and conventional Bluetooth are collectively referred to as "Bluetooth".

In non-limiting embodiments, the processor is in the PDD. In non-limiting implementations, the processor when executing the instructions is configured for sending messages to CCSDs requesting test transmissions. Moreover, the processor when executing the instructions may be configured for using the test transmissions for the determining step. The device can include a display configured for being controlled by the processor to present demanded images.

In example implementations, the processor when executing the instructions is configured for, responsive to determining that the CCSD in proximity to the PDD is within the room in the building in which the PDD is disposed, causing ancillary content related to the primary content to be provided to the CCSD for presentation of the ancillary content thereon.

In other implementations or in the same implementation, the processor when executing the instructions is configured for, responsive to determining that the CCSD in proximity to the PDD is within the room in the building in which the PDD is disposed, causing a message regarding accessing ancillary content to be provided to the CCSD for presentation of the message thereon.

In another aspect, a candidate companion screen device (CCSD) includes at least one display, at least one computer readable storage medium, and at least one processor configured for accessing instructions on the computer readable storage medium for configuring the processor for receiving a message soliciting the CCSD to be a companion screen to a primary display device (PDD). Responsive to the message, the processor when executing the instructions is configured for presenting on the display at least one user interface (UI) inquiring whether a user of the CCSD authorizes the CCSD to be used as a companion screen to the PDD, and responsive to user authorization to use the CCSD as a companion screen to the PDD, the processor when executing the instructions is configured for presenting a link to ancillary content related to primary content associated with the PDD, and/or presenting the ancillary content on the CCSD. The link may be to the Internet, to the PPD itself, or to another device on the home network.

In this aspect, if desired the processor when executing the instructions can be configured for, responsive to user authorization to use the CCSD as a companion screen to the PDD, presenting a link to ancillary content related to primary content associated with the PDD. If desired, the processor when executing the instructions can be configured for, responsive to user authorization to use the CCSD as a companion screen to the PDD, presenting the ancillary content on the CCSD. Moreover, the processor when executing the instructions may be configured for presenting on the display a UI presenting the ancillary content and a selector element selectable by a user to discontinue use of the CCSD as a companion device for presenting the ancillary content. The processor when executing the instructions may also be configured for presenting on the display a UI enabling a user to select whether to allow the CCSD to be automatically selected as a companion device. The UI enabling a user to select whether to allow the CCSD to be automatically selected as a companion device may include a message that the CCSD can be automatically selected as a companion device when in a same room as the PDD.

In another aspect, an apparatus includes a computer readable storage medium bearing instructions executable by a processor and a processor configured for accessing the computer readable storage medium to execute the instructions to configure the processor for receiving wireless signals from at least first and second candidate companion screen devices (CCSDs). Based on the signals, the processor when executing the instructions is configured for determining that the first CCSD is in a room with a primary display device (PDD) and determining that the second CCSD is not in the room with the PDD. Responsive to determining that the first CCSD is in the room with the PDD, the processor when executing the instructions is configured for executing logic related to presenting ancillary content on the first CCSD, with the ancillary content being related to primary content associated with the PDD. On the other hand, responsive to determining that the second CCSD is not in the room with the PDD, the processor when executing the instructions is configured for not executing logic related to presenting ancillary content on the second CCSD.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Figure 1 is a block diagram of an example system including an example in accordance with present principles;
Figures 2-10 are flow charts showing example algorithms according to present principles; and
Figures 11-13 are example screen shots of a companion screen device according to present principles.

This disclosure relates generally to computer ecosystems including aspects of consumer electronics (CE) device based user information in computer ecosystems. A system herein may include server and client components, connected over a network such that data may be exchanged between the client and server components. The client components may include one or more computing devices including portable televisions (e.g. smart TVs, Internet-enabled TVs), portable computers such as laptops and tablet computers, and other mobile devices including smart phones and additional examples discussed below. These client devices may operate with a variety of operating environments. For example, some of the client computers may employ, as examples, operating systems from Microsoft, or a Unix operating system, or operating systems produced by Apple Computer or Google. These operating environments may be used to execute one or more browsing programs, such as a browser made by Microsoft or Google or Mozilla or other browser program that can access web applications hosted by the Internet servers discussed below.

Servers may include one or more processors executing instructions that configure the servers to receive and transmit data over a network such as the Internet. Or, a client and server can be connected over a local intranet or a virtual private network.

Information may be exchanged over a network between the clients and servers. To this end and for security, servers and/or clients can include firewalls, load balancers, temporary storages, and proxies, and other network infrastructure for reliability and security. One or more servers may form an apparatus that implement methods of providing a secure community such as an online social website to network members.

As used herein, instructions refer to computer-implemented steps for processing information in the system. Instructions can be implemented in software, firmware or hardware and include any type of programmed step undertaken by components of the system. A processor may be any conventional general purpose single- or multi-chip processor that can execute logic by means of various lines such as address lines, data lines, and control lines and registers and shift registers.

Software modules described by way of the flow charts and user interfaces herein can include various sub-routines, procedures, etc. Without limiting the disclosure, logic stated to be executed by a particular module can be redistributed to other software modules and/or combined together in a single module and/ or made available in a shareable library.

Present principles described herein can be implemented as hardware, software, firmware, or combinations thereof; hence, illustrative components, blocks, modules, circuits, and steps are set forth in terms of their functionality.

Further to what has been alluded to above, logical blocks, modules, and circuits described below can be implemented or performed with a general purpose processor, a digital signal processor (DSP), a field programmable gate array (FPGA) or other programmable logic device such as an application specific integrated circuit (ASIC), discrete gate or transistor logic, discrete hardware components, or any combination thereof designed to perform the functions described herein. A processor can be implemented by a controller or state machine or a combination of computing devices.

The functions and methods described below, when implemented in software, can be written in an appropriate language such as but not limited to C# or C++, and can be stored on or transmitted through a computer-readable storage medium such as a random access memory (RAM), read-only memory (ROM), electrically erasable programmable read-only memory (EEPROM), compact disk read-only memory (CD-ROM) or other optical disk storage such as digital versatile disc (DVD), magnetic disk storage or other magnetic storage devices including removable thumb drives, etc. A connection may establish a computer-readable medium. Such connections can include, as examples, hard-wired cables including fiber optics and coaxial wires and digital subscriber line (DSL) and twisted pair wires. Such connections may include wireless communication connections including infrared and radio.

Components included in one embodiment can be used in other embodiments in any appropriate combination. For example, any of the various components described herein and/or depicted in the Figures may be combined, interchanged or excluded from other embodiments.

"A system having at least one of A, B, and C" (likewise "a system having at least one of A, B, or C" and "a system having at least one of A, B, C") includes systems that have A alone, B alone, C alone, A and B together, A and C together, B and C together, and/or A, B, and C together, etc.

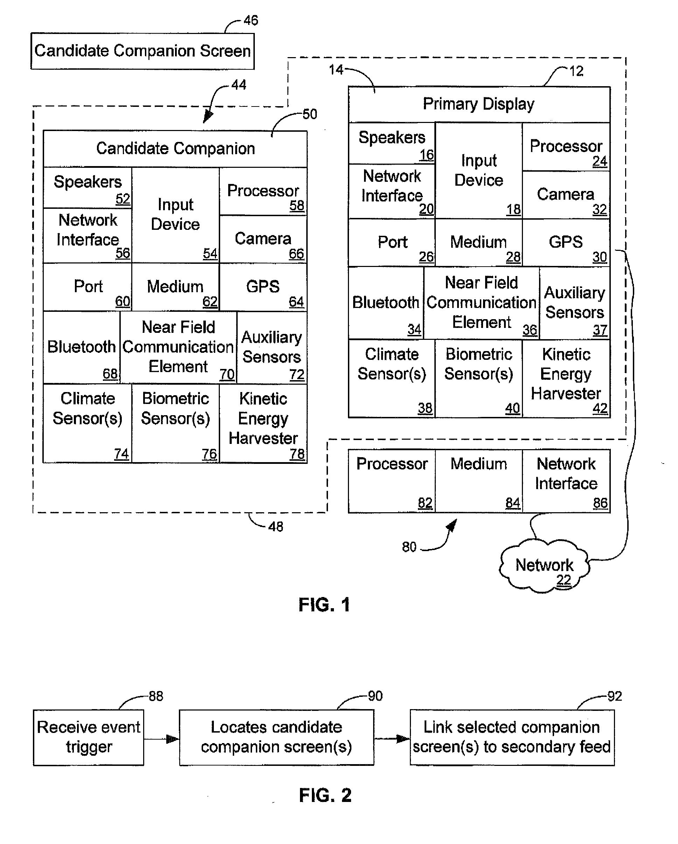

Now specifically referring to Figure 1, an example ecosystem 10 is shown, which may include one or more of the example devices mentioned above and described further below in accordance with present principles. The first of the example devices included in the system 10 is an example primary display device, and in the embodiment shown is an audio video display device (AVDD) 12 such as but not limited to an Internet-enabled TV. Thus, the AVDD 12 alternatively may be an appliance or household item, e.g. computerized Internet enabled refrigerator, washer, or dryer. The AVDD 12 alternatively may also be a computerized Internet enabled ("smart") telephone, a tablet computer, a notebook computer, a wearable computerized device such as e.g. computerized Internet-enabled watch, a computerized Internet-enabled bracelet, other computerized Internet-enabled devices, a computerized Internet-enabled music player, computerized Internet-enabled head phones, a computerized Internet-enabled implantable device such as an implantable skin device, etc. Regardless, it is to be understood that the AVDD 12 is configured to undertake present principles (e.g. communicate with other CE devices to undertake present principles, execute the logic described herein, and perform any other functions and/or operations described herein).

Accordingly, to undertake such principles the AVDD 12 can be established by some or all of the components shown in Figure 1. For example, the AVDD 12 can include one or more displays 14 that may be implemented by a high definition or ultra-high definition flat screen and that may be touch-enabled for receiving user input signals via touches on the display. The AVDD 12 may include one or more speakers 16 for outputting audio in accordance with present principles, and at least one additional input device 18 such as e.g. an audio receiver/microphone for e.g. entering audible commands to the AVDD 12 to control the AVDD 12. The example AVDD 12 may also include one or more network interfaces 20 for communication over at least one network 22 such as the Internet, an WAN, an LAN, etc. under control of one or more processors 24. Thus, the interface 20 may be, without limitation, a Wi-Fi transceiver, which is an example of a wireless computer network interface. It is to be understood that the processor 24 controls the AVDD 12 to undertake present principles, including the other elements of the AVDD 12 described herein such as e.g. controlling the display 14 to present images thereon and receiving input therefrom. Furthermore, note the network interface 20 may be, e.g., a wired or wireless modem or router, or other appropriate interface such as, e.g., a wireless telephony transceiver, or Wi-Fi transceiver as mentioned above, etc.

In addition to the foregoing, the AVDD 12 may also include one or more input ports 26 such as, e.g., a USB port to physically connect (e.g. using a wired connection) to another CE device and/or a headphone port to connect headphones to the AVDD 12 for presentation of audio from the AVDD 12 to a user through the headphones. The AVDD 12 may further include one or more tangible computer readable storage medium 28 such as disk-based or solid state storage. Also in some embodiments, the AVDD 12 can include a position or location receiver such as but not limited to a cellphone receiver, GPS receiver and/or altimeter 30 that is configured to e.g. receive geographic position information from at least one satellite or cellphone tower and provide the information to the processor 24 and/or determine an altitude at which the AVDD 12 is disposed in conjunction with the processor 24. However, it is to be understood that that another suitable position receiver other than a cellphone receiver, GPS receiver and/or altimeter may be used in accordance with present principles to e.g. determine the location of the AVDD 12 in e.g. all three dimensions.

Continuing the description of the AVDD 12, in some embodiments the AVDD 12 may include one or more cameras 32 that may be, e.g., a thermal imaging camera, a digital camera such as a webcam, and/or a camera integrated into the AVDD 12 and controllable by the processor 24 to gather pictures/images and/or video in accordance with present principles. Also included on the AVDD 12 may be a Bluetooth transceiver 34 and other Near Field Communication (NFC) element 36 for communication with other devices using Bluetooth and/or NFC technology, respectively. An example NFC element can be a radio frequency identification (RFID) element.

Further still, the AVDD 12 may include one or more auxiliary sensors 37 (e.g., a motion sensor such as an accelerometer, gyroscope, cyclometer, or a magnetic sensor, an infrared (IR) sensor, an optical sensor, a speed and/or cadence sensor, a gesture sensor (e.g. for sensing gesture command), etc.) providing input to the processor 24. The AVDD 12 may include still other sensors such as e.g. one or more climate sensors 38 (e.g. barometers, humidity sensors, wind sensors, light sensors, temperature sensors, etc.) and/or one or more biometric sensors 40 providing input to the processor 24. In addition to the foregoing, it is noted that in some embodiments the AVDD 12 may also include a kinetic energy harvester 42 to e.g. charge a battery (not shown) powering the AVDD 12.

Still referring to Figure 1, in addition to the AVDD 12, the system 10 may include one or more other CE device types that may establish candidate companion screen devices for the primary display device established by the AVDD 12. In one example, a first candidate companion screen device is established by a first CE device 44 while a second companion screen device may be established by a second CE device 46 which may include similar components as the first CE device 44 and hence will not be discussed in detail. In the example shown, only two CE devices 44, 46 are shown as candidate companion screen devices, it being understood that only one candidate companion screen device or more than two candidate companion screen devices may be used.

In the example shown, to illustrate present principles all three devices 12, 44, 46 are assumed to be members of a home entertainment network in a dwelling or at least to be present in proximity to each other in a location such as a house. However, for illustrating present principles the first CE device 44 is assumed to be in the same room as the AVDD 12, bounded by walls illustrated by dashed lines 48, whereas the second CE device 46, while not being necessarily further from the AVDD 12 as is the first CE device 44 and in fact while potentially being closer to the AVDD 12 than is the first CE device 44, is outside the room bounded by the walls 48.

The example non-limiting first CE device 44 may be established by any one of the above-mentioned devices and accordingly may have one or more of the components described below. Specifically, the first CE device 44 may include one or more displays 50 that may be touch-enabled for receiving user input signals via touches on the display. The first CE device 44 may include one or more speakers 52 for outputting audio in accordance with present principles, and at least one additional input device 54 such as e.g. an audio receiver/microphone for e.g. entering audible commands to the first CE device 44 to control the device 44. The example first CE device 44 may also include one or more network interfaces 56 for communication over the network 22 under control of one or more CE device processors 58. Thus, the interface 56 may be, without limitation, a Wi-Fi transceiver, which is an example of a wireless computer network interface. It is to be understood that the processor 58 controls the first CE device 44 to undertake present principles, including the other elements of the first CE device 44 described herein such as e.g. controlling the display 50 to present images thereon and receiving input therefrom. Furthermore, note the network interface 56 may be, e.g., a wired or wireless modem or router, or other appropriate interface such as, e.g., a wireless telephony transceiver, or Wi-Fi transceiver as mentioned above, etc.

In addition to the foregoing, the first CE device 44 may also include one or more input ports 60 such as, e.g., a USB port to physically connect (e.g. using a wired connection) to another CE device and/or a headphone port to connect headphones to the first CE device 44 for presentation of audio from the first CE device 44 to a user through the headphones. The first CE device 44 may further include one or more tangible computer readable storage medium 62 such as disk-based or solid state storage. Also in some embodiments, the first CE device 44 can include a position or location receiver such as but not limited to a cellphone and/or GPS receiver and/or altimeter 64 that is configured to e.g. receive geographic position information from at least one satellite and/or cell tower, using triangulation, and provide the information to the CE device processor 58 and/or determine an altitude at which the first CE device 44 is disposed in conjunction with the CE device processor 58. However, it is to be understood that that another suitable position receiver other than a cellphone and/or GPS receiver and/or altimeter may be used in accordance with present principles to e.g. determine the location of the first CE device 44 in e.g. all three dimensions.

Continuing the description of the first CE device 44, in some embodiments the first CE device 44 may include one or more cameras 66 that may be, e.g., a thermal imaging camera, a digital camera such as a webcam, and/or a camera integrated into the first CE device 44 and controllable by the CE device processor 58 to gather pictures/images and/or video in accordance with present principles. Also included on the first CE device 44 may be a Bluetooth transceiver 68 and other Near Field Communication (NFC) element 70 for communication with other devices using Bluetooth and/or NFC technology, respectively. An example NFC element can be a radio frequency identification (RFID) element.

Further still, the first CE device 44 may include one or more auxiliary sensors 72 (e.g., a motion sensor such as an accelerometer, gyroscope, cyclometer, or a magnetic sensor, an infrared (IR) sensor, an optical sensor, a speed and/or cadence sensor, a gesture sensor (e.g. for sensing gesture command), etc.) providing input to the CE device processor 58. The first CE device 44 may include still other sensors such as e.g. one or more climate sensors 74 (e.g. barometers, humidity sensors, wind sensors, light sensors, temperature sensors, etc.) and/or one or more biometric sensors 76 providing input to the CE device processor 58. In addition to the foregoing, it is noted that in some embodiments the first CE device 44 may also include a kinetic energy harvester 78 to e.g. charge a battery (not shown) powering the first CE device 44. The second CE device 46 may include some or all of the components shown for the CE device 44.

Now in reference to the afore-mentioned at least one server 80, it includes at least one server processor 82, at least one tangible computer readable storage medium 84 such as disk-based or solid state storage, and at least one network interface 86 that, under control of the server processor 82, allows for communication with the other devices of Figure 1 over the network 22, and indeed may facilitate communication between servers and client devices in accordance with present principles. Note that the network interface 86 may be, e.g., a wired or wireless modem or router, Wi-Fi transceiver, or other appropriate interface such as, e.g., a wireless telephony transceiver.

Accordingly, in some embodiments the server 80 may be an Internet server, and may include and perform "cloud" functions such that the devices of the system 10 may access a "cloud" environment via the server 80 in example embodiments.

Figure 2 shows overall logic according to present principles. In some examples an event trigger may be received at block 88 to activate the ensuing logic. For example, a particular actor or product or sound may appear or program change in a broadcast channel being presented on the AVDD 12 as indicated by metadata in the program, or by recognition of demanded images by the AVDD processor 24, or by recognition of sounds presented on the AVDD 12 speakers 16 as detected by the microphone 18 and analyzed by the processor 24 either in a standalone mode and/or by uploading the images/sounds to the cloud server 80 for analysis, which sends the analysis results back to the AVDD 12. Or, using detection principles below the AVDD 12 may recognize that a candidate companion device 44 or 46 has been carried into the room in which the AVDD 12 is disposed, using such recognition as a trigger.

In any case, as set forth further below at block 90 the AVDD 12 locates candidate companion screens that are in the same room as the AVDD 12, screening out candidate companion screens that may be nearby but outside the walls 48. At block 92 one or more candidate companion screens that are detected as being in the same room as the AVDD 12 are provided with ancillary feed(s) related to the program being presented on the AVDD 12 by, e.g., linking the companion screen(s) to a computer site associated with the program being presented on the AVDD 12. This linking may entail simply providing a network address or link from the AVDD 12 to the companion screen which a user can select to cause a network browser to access a computer network site on the home network, on the PDD itself, or on the Internet supplying the ancillary feed/content/data (used interchangeably), or the linking may be more automated, e.g., the AVDD may command the companion screen device to automatically access a particular network site and automatically commence downloading the ancillary feed/content/data without any user action to accomplish this.

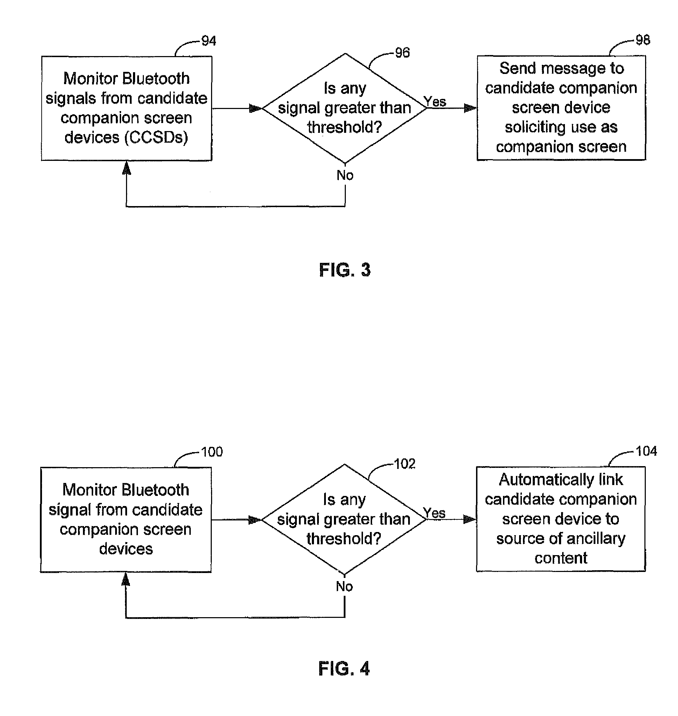

Figure 3 illustrates example logic. Commencing at block 94, Bluetooth signals are monitored by a processor accessing a wireless receiver, for example, by the PDD processor 24. Bluetooth being relatively short-range, any detected signals can be assumed to be from candidate companion screen devices (CCSDs) in the home digital ecosystem, such as the CCSDs 44, 46 shown in Figure 1 that are nearby the PDD. According to present principles, it is desirable to select, for a companion screen to present ancillary content related to primary content associated with (as, for example, being presented on) the PDD display 14, a CCSD that is in the same room as the PDD, on the ground that a CCSD outside the room more likely than not will not be desired by its user to be employed as a companion screen to a PDD that the user outside the room cannot see.

Accordingly, at decision diamond 96 it is determined whether any or all signals have signal strengths satisfying a threshold signal strength as received at the receiver of the processor executing the logic. The threshold signal strength may be established as appropriate to eliminate most signals propagating through walls 48 (Figure 1) but not to eliminate signals transmitted in a direct line-of-sight from a CCSD to the PDD. Or, the threshold signal strength may be established on-the-fly as simply being the signal strength of the strongest signal received, to ensure that at least one CCSD is accorded the logic at block 98.

Accordingly, responsive to a determination at decision diamond 96 that one or more of the received Bluetooth signals satisfies the threshold, the logic can move to block 98. If the signal of only one CCSD satisfies the threshold, at block 98 a message may be sent (e.g., from the PDD through the Bluetooth transmitter 34, or through the NFC element 36, or through network interface 20) to the CCSD (using, for example, the appropriate network address thereof) soliciting use of the CCSD as a companion screen to the PDD. An example of such a message is shown further below. The logic of block 92 in Figure 2 may then be employed if the user of the solicited CCSD accepts the solicitation.

If multiple CCSD Bluetooth signals have strengths satisfying the threshold, the logic of block 98 may be executed for each such CCSD to send the message to each such CCSD. Or, the logic of block 98 may be executed only for the CCSD transmitting the signal with the strongest signal strength. Or, the logic of block 98 may be executed only for the one of the CCSDs with sufficiently strong signals that is of a particular model of CE device. In this instance, for example, if both a tablet computer and a mobile telephone have sufficiently strong signals to satisfy the threshold, only the tablet computer may be sent the message at block 98, on the ground that the tablet computer likely will have a larger display than the telephone.

Figure 4 illustrates alternate logic in which Bluetooth signals are monitored for at block 100 and compared to a threshold at decision diamond 102 according to principles discussed above. A positive test at decision diamond 102, however, may result in the logic of block 104 being implemented. At block 104, for at least one CCSD satisfying the threshold test at decision diamond 102, the CCSD may be caused (as by command from the PDD) to automatically access a particular network site (as identified, e.g., by the PDD from metadata accompanying the primary content) and to automatically commence downloading the ancillary feed/content/data without any user action to accomplish this.

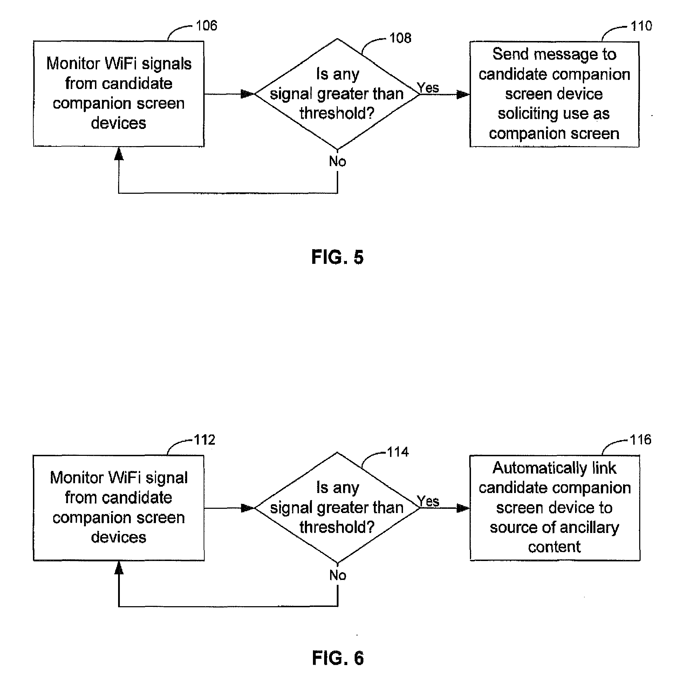

Figure 5 illustrates alternate example logic. Commencing at block 106, wireless Internet signals such as Wi-Fi signals are monitored by a processor accessing a wireless receiver, for example, by the PDD processor 24. Wi-Fi may be implemented by one or more standards such as Institute of Electrical and Electronics Engineers (IEEE) 802.11 (a) (b) (g) or (n) standards.

Wi-Fi being relatively short-range, any detected signals can be assumed to be from CCSDs in the home digital ecosystem, such as the CCSDs 44, 46 shown in Figure 1 that are nearby the PDD. According to present principles, it is desirable to select, for a companion screen to present ancillary content related to primary content associated with (as, for example, being presented on) the PDD display 14, a CCSD that is in the same room as the PDD, on the ground that a CCSD outside the room more likely than not will not be desired by its user to be employed as a companion screen to a PDD that the user outside the room cannot see.

Accordingly, at decision diamond 108 it is determined whether any or all signals being monitored have signal strengths satisfying a threshold signal strength as received at the receiver of the processor executing the logic. The threshold signal strength may be established as appropriate to eliminate most signals propagating through walls 48 (Figure 1) but not to eliminate signals transmitted in a direct line-of-sight from a CCSD to the PDD. Or, the threshold signal strength may be established on-the-fly as simply being the signal strength of the strongest signal received, to ensure that at least one CCSD is accorded the logic at block 110.

Accordingly, responsive to a determination at decision diamond 108 that one or more of the received Wi-Fi signals satisfies the threshold, the logic can move to block 110. If the signal of only one CCSD satisfies the threshold, at block 110 a message may be sent (e.g., from the PDD through the Bluetooth transmitter 34, or through the NFC element 36, or through network interface 20) to the CCSD (using, for example, the appropriate network address thereof) soliciting use of the CCSD as a companion screen to the PDD. An example of such a message is shown further below. The logic of block 92 in Figure 2 may then be employed if the user of the solicited CCSD accepts the solicitation.

If multiple CCSD Wi-Fi signals have strengths satisfying the threshold, the logic of block 110 may be executed for each such CCSD to send the message to each such CCSD. Or, the logic of block 110 may be executed only for the CCSD transmitting the Wi-Fi signal with the strongest signal strength. Or, the logic of block 110 may be executed only for the one of the CCSDs with sufficiently strong Wi-Fi signals that is of a particular model of CE device. In this instance, for example, if both a tablet computer and a mobile telephone have sufficiently strong signals to satisfy the threshold, only the tablet computer may be sent the message at block 110, on the ground that the tablet computer likely will have a larger display than the telephone.

Figure 6 illustrates alternate logic in which Wi-Fi signals are monitored for at block 112 and compared to a threshold at decision diamond 114 according to principles discussed above. A positive test at decision diamond 114, however, may result in the logic of block 116 being implemented. At block 116, for at least one CCSD satisfying the threshold test at decision diamond 114, the CCSD may be caused (as by command from the PDD) to automatically access a particular network site (as identified, e.g., by the PDD from metadata accompanying the primary content) and to automatically commence downloading the ancillary feed/content/data without any user action to accomplish this.

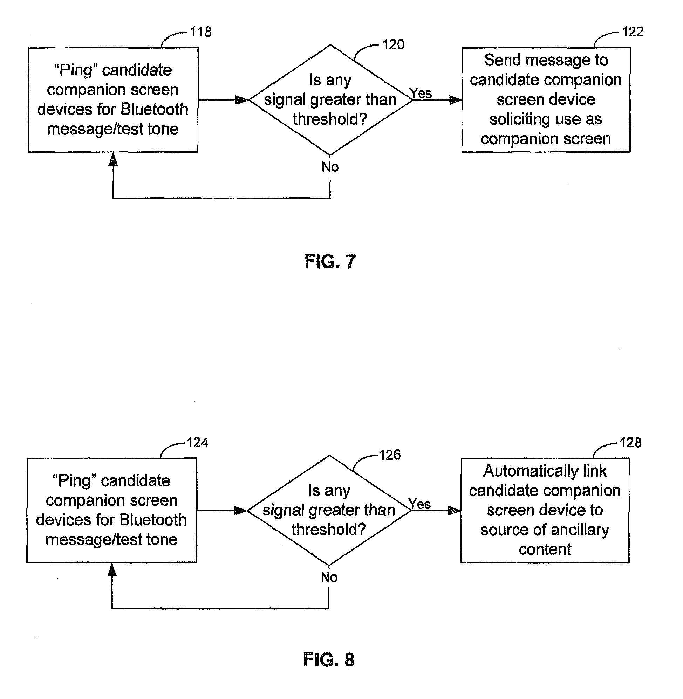

Figure 7 illustrates further example logic. Commencing at block 118, a processor such as the PDD processor 24 may broadcast a command within the home digital ecosystem for CCSDs to transmit a Bluetooth message or simply a Bluetooth test tone. The command may specify a particular transmission signal strength for the CCDs to use if desired. The responses are received at a wireless receiver associated with the processor executing the logic (e.g., the Bluetooth transceiver 34 in Figure 1).

Accordingly, at decision diamond 120 it is determined whether any or all Bluetooth responses received have signal strengths satisfying a threshold signal strength as received at the receiver of the processor executing the logic. The threshold signal strength may be established as appropriate to eliminate most signals propagating through walls 48 (Figure 1) but not to eliminate signals transmitted in a direct line-of-sight from a CCSD to the PDD. Or, the threshold signal strength may be established on-the-fly as simply being the signal strength of the strongest signal received, to ensure that at least one CCSD is accorded the logic at block 122.

Responsive to a determination at decision diamond 120 that one or more of the received Bluetooth response signals satisfies the threshold, the logic can move to block 122. If the signal of only one CCSD satisfies the threshold, at block 122 a message may be sent (e.g., from the PDD through the Bluetooth transmitter 34, or through the NFC element 36, or through network interface 20) to the CCSD (using, for example, the appropriate network address thereof) soliciting use of the CCSD as a companion screen to the PDD. An example of such a message is shown further below. The logic of block 92 in Figure 2 may then be employed if the user of the solicited CCSD accepts the solicitation.

If multiple CCSD Bluetooth response signals have strengths satisfying the threshold, the logic of block 122 may be executed for each such CCSD to send the message to each such CCSD. Or, the logic of block 122 may be executed only for the CCSD transmitting the Bluetooth response signal with the strongest signal strength. Or, the logic of block 122 may be executed only for the one of the CCSDs with sufficiently strong Bluetooth response signals that is of a particular model of CE device. In this instance, for example, if both a tablet computer and a mobile telephone have sufficiently strong signals to satisfy the threshold, only the tablet computer may be sent the message at block 122, on the ground that the tablet computer likely will have a larger display than the telephone.

Figure 8 illustrates alternate logic in which Bluetooth response signals are "pinged" for at block 124 and the responses compared to a threshold at decision diamond 126 according to principles discussed above in relation to Figure 7. A positive test at decision diamond 126, however, may result in the logic of block 128 being implemented. At block 128, for at least one CCSD satisfying the threshold test at decision diamond 128, the CCSD may be caused (as by command from the PDD) to automatically access a particular network site (as identified, e.g., by the PDD from metadata accompanying the primary content) and to automatically commence downloading the ancillary feed/content/data without any user action to accomplish this. The ancillary feed/content/data may come from the PDD, or the PDD can deliver a link to the CCSD and the CCSD can pull it directly from the Internet.

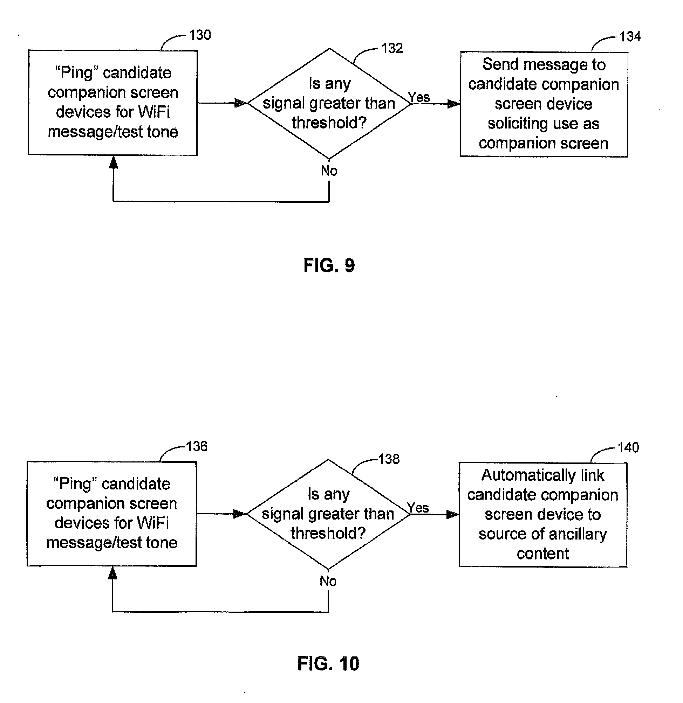

Figure 9 illustrates further example logic. Commencing at block 130, a processor such as the PDD processor 24 may broadcast a command within the home digital ecosystem for CCSDs to transmit a Wi-Fi message or simply a Wi-Fi test tone. The command may specify a particular transmission signal strength for the CCDs to use if desired. The responses are received at a wireless receiver associated with the processor executing the logic (e.g., the network interface 20 in Figure 1).

Accordingly, at decision diamond 132 it is determined whether any or all Wi-Fi responses received have signal strengths satisfying a threshold signal strength as received at the receiver of the processor executing the logic. The threshold signal strength may be established as appropriate to eliminate most signals propagating through walls 48 (Figure 1) but not to eliminate signals transmitted in a direct line-of-sight from a CCSD to the PDD. Or, the threshold signal strength may be established on-the-fly as simply being the signal strength of the strongest signal received, to ensure that at least one CCSD is accorded the logic at block 134.

Responsive to a determination at decision diamond 132 that one or more of the received Wi-Fi response signals satisfies the threshold, the logic can move to block 134. If the signal of only one CCSD satisfies the threshold, at block 134 a message may be sent (e.g., from the PDD through the Bluetooth transceiver 34, or through the NFC element 36, or through network interface 20) to the CCSD (using, for example, the appropriate network address thereof) soliciting use of the CCSD as a companion screen to the PDD. An example of such a message is shown further below. The logic of block 92 in Figure 2 may then be employed if the user of the solicited CCSD accepts the solicitation.

If multiple CCSD Wi-Fi response signals have strengths satisfying the threshold, the logic of block 134 may be executed for each such CCSD to send the message to each such CCSD. Or, the logic of block 134 may be executed only for the CCSD transmitting the Wi-Fi response signal with the strongest signal strength. Or, the logic of block 134 may be executed only for the one of the CCSDs with sufficiently strong Wi-Fi response signals that is of a particular model of CE device. In this instance, for example, if both a tablet computer and a mobile telephone have sufficiently strong signals to satisfy the threshold, only the tablet computer may be sent the message at block 134, on the ground that the tablet computer likely will have a larger display than the telephone.

Figure 10 illustrates alternate logic in which Wi-Fi response signals are "pinged" for at block 136 and the responses compared to a threshold at decision diamond 138 according to principles discussed above in relation to Figure 9. A positive test at decision diamond 138, however, may result in the logic of block 140 being implemented. At block 140, for at least one CCSD satisfying the threshold test at decision diamond 138, the CCSD may be caused (as by command from the PDD) to automatically access a particular network site (as identified, e.g., by the PDD from metadata accompanying the primary content) and to automatically commence downloading the ancillary feed/content/data without any user action to accomplish this.

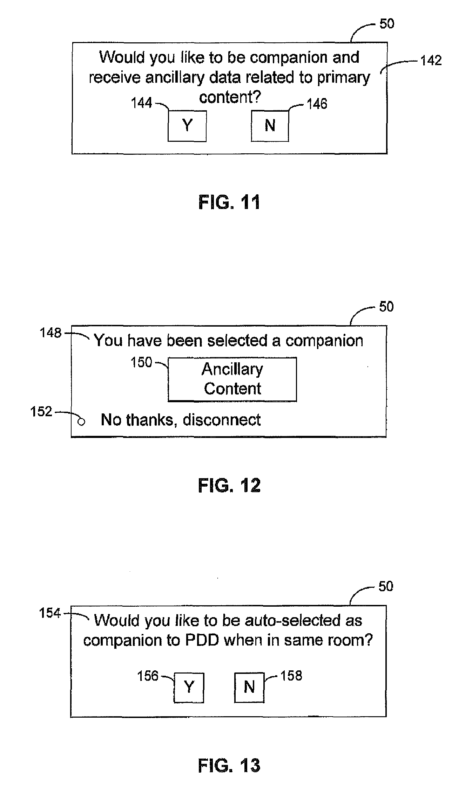

Figure 11 shows an example UI presenting an example solicitation message 142 on a display 50 of a CCSD pursuant to any one of the "message solicitation" blocks 98, 110, 122, 134 described above. A user may select a "yes" selector element 144 to accept the CCSD to be a companion screen to the PDD, in which case the PDD may send a link to the CCSD to a computer site or broadcast site or other site to download ancillary content or provide the ancillary content itself from data that it is receiving but not displaying on the primary display 14. Or, in response to selecting the selector 144 the PDD may automatically cause the CCSD to automatically and without user interaction begin downloading the ancillary content as described above. The user can decline to have the CCSD used as a companion device by selecting a "no" selector element 146.

Figure 12 illustrates a UI that can be presented on a display 50 of a CCSD pursuant to any one of "automatic linking" blocks 104, 116, 128, 140 described above. As shown, a message 148 may inform the user of the CCSD that the CCSD has been selected as a companion device, and a window 150 of the display 50 is used to present the ancillary content, which recall is effected automatically without user interaction once the CCSD signal strength has satisfied the threshold test. A decline selector 152 may be presented which when selected disconnects or otherwise disables, at least temporarily, the CCSD from use as a companion screen to the PDD.

Figure 13 illustrates an example UI that can be presented on a display 50 of a CCSD in a set-up mode to essentially allow the user to select between the two modes embodied in Figures 11 and 12. A message 154 may be presented asking the user if the user would like the CCSD to be subject to automatic selection as a companion screen to the PDD when the CCSD is in the same room as the PDD. A yes selector 156 enables a user to select this feature, while a no selector 158 enables a user to decline automatic selection of the CCSD as a companion screen.

While the particular PROXIMITY DETECTION OF CANDIDATE COMPANION DISPLAY DEVICE IN SAME ROOM AS PRIMARY DISPLAY USING WI-FI OR BLUETOOTH SIGNAL STRENGTH is herein shown and described in detail, it is to be understood that the subject matter which is encompassed by the present invention is limited only by the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.
1. Apparatus comprising:
   at least one computer readable storage medium bearing instructions executable by a processor;
   at least one processor configured for accessing the computer readable storage medium to execute the instructions to configure the processor for:
      receiving wireless signals from at least first and second candidate companion screen devices (CCSDs);
      based on the signals, determining that the first CCSD is in a room with a primary display device (PDD) and determining that the second CCSD is not in the room with the PDD;
      responsive to determining that the first CCSD is in the room with the PDD, executing logic related to presenting ancillary content on the first CCSD, with the ancillary content being related to primary content associated with the PDD; and
      responsive to determining that the second CCSD is not in the room with the PDD, not executing logic related to presenting ancillary content on the second CCSD.
2. The apparatus of Clause 1, wherein the processor when executing the instructions is configured for determining whether a CCSD in proximity to the PDD is within a room in a building in which the PDD is disposed based on Wi-Fi signal strength.
3. The apparatus of Clause 1, wherein the processor when executing the instructions is configured for determining whether a CCSD in proximity to the PDD is within a room in a building in which the PDD is disposed using Bluetooth signal strength.
4. The apparatus of Clause 1, wherein the processor is in the PDD.
5. The apparatus of Clause 1, wherein the processor when executing the instructions is configured for sending messages to CCSDs requesting test transmissions, the processor when executing the instructions being configured for using the test transmissions for the determining steps.
6. The apparatus of Clause 1, comprising a display configured for being controlled by the processor to present demanded images.

## Claims

1. A device comprising:
at least one computer readable storage medium bearing instructions executable by a processor;
at least one processor configured for accessing the computer readable storage medium to execute the instructions to configure the processor for:
determining whether a candidate companion screen device (CCSD) in proximity to a primary display device (PDD) is within a room in a building in which the PDD is disposed in which the PDD is presenting primary content; and
responsive to determining that the CCSD in proximity to the PDD is within the room in the building in which the PDD is disposed, causing ancillary content related to the primary content to be provided to the CCSD for presentation of the ancillary content thereon, and/or causing a message regarding accessing ancillary content to be provided to the CCSD for presentation of the message thereon.

2. The device of Claim 1, wherein the processor when executing the instructions is configured for determining whether a CCSD in proximity to the PDD is within a room in a building in which the PDD is disposed by either measuring the CCSD's Wi-Fi signal strength, or adjusting the PPD's transmitted Wi-Fi signal strength and monitoring if the CCSD is able to respond to the PDD

3. The device of Claim 1, wherein the processor when executing the instructions is configured for determining whether a CCSD in proximity to the PDD is within a room in a building in which the PDD is disposed by either measuring the CCSD's Bluetooth signal strength, or adjusting the PPD's transmitted Bluetooth signal strength and monitoring if the CCSD is able to respond to the PDD.

4. The device of Claim 1, wherein the processor when executing the instructions is configured for sending messages to CCSDs requesting test transmissions, the processor when executing the instructions being configured for using the test transmissions for the determining step.

5. The device of Claim 1, comprising a display configured for being controlled by the processor to present demanded images.

6. The device of Claim 1, wherein the processor when executing the instructions is configured for, responsive to determining that the CCSD in proximity to the PDD is within the room in the building in which the PDD is disposed, causing ancillary content related to the primary content to be provided to the CCSD for presentation of the ancillary content thereon.

7. The device of Claim 1, wherein the processor when executing the instructions is configured for, responsive to determining that the CCSD in proximity to the PDD is within the room in the building in which the PDD is disposed, causing a message regarding accessing ancillary content to be provided to the CCSD for presentation of the message thereon.

8. Candidate companion screen device (CCSD), comprising:
at least one display;
at least one computer readable storage medium; and
at least one processor configured for accessing instructions on the computer readable storage medium for configuring the processor for:
receiving a message soliciting the CCSD to be a companion screen to a primary display device (PDD);
responsive to the message, presenting on the display at least one user interface (UI) inquiring whether a user of the CCSD authorizes the CCSD to be used as a companion screen to the PDD; and
responsive to user authorization to use the CCSD as a companion screen to the PDD, presenting a link to ancillary content related to primary content associated with the PDD, and/or presenting the ancillary content on the CCSD.

9. The CCSD of Claim 8, wherein the processor when executing the instructions is configured for, responsive to user authorization to use the CCSD as a companion screen to the PDD, presenting a link to ancillary content related to primary content associated with the PDD.

10. The CCSD of Claim 8, wherein the link to ancillary content may be to the Internet, the PPD, or other device in the home network.

11. The CCSD of Claim 8, wherein the processor when executing the instructions is configured for, responsive to user authorization to use the CCSD as a companion screen to the PDD, presenting the ancillary content on the CCSD.

12. The CCSD of Claim 8, wherein the processor when executing the instructions is configured for presenting on the display a UI presenting the ancillary content and a selector element selectable by a user to discontinue use of the CCSD as a companion device for presenting the ancillary content.

13. The CCSD of Claim 8, wherein the processor when executing the instructions is configured for presenting on the display a UI enabling a user to select whether to allow the CCSD to be automatically selected as a companion device.

14. The CCSD of Claim 13, wherein the UI enabling a user to select whether to allow the CCSD to be automatically selected as a companion device includes a message that the CCSD can be automatically selected as a companion device when in a same room as the PDD.
